# EUROPÄISCHE PATENTANMELDUNG

(11) **EP 1 724 194 A1**
(43) Veröffentlichungstag der Anmeldung: **22.11.2006**
(21) Anmeldenummer: 06003673.8
(22) Anmeldetag: 23.02.2006
(51) Int. Cl.: B64D 11/06, B60N 2/30

(54) **Fluggastsitz**

(30) Priorität: 19.05.2005 DE 102005022949
(71) Anmelder: Recaro Aircraft Seating GmbH & Co. KG, 74523 Schwäbisch Hall (DE)
(72) Erfinder: Funke, Matthias, 74544 Michelbach (DE)
(74) Vertreter: Bartels & Partner

(57) **Zusammenfassung**

Ein Fluggastsitz, mit Sitzkomponenten wie beispielsweise Rückenlehne (1), Armlehne (3) und mittels Sitzfüßen (9) auf dem Kabinenboden aufständerbarem Sitzteil (7), von denen zumindest eine Sitzkomponente relativ zur anderen lageveränderlich ist, weist eine Sitz-Zusatzkomponente auf, die zur bedarfsweisen Bildung eines Kindersitzes ein Auflageteil (13) aufweist, das mittels einer Einstelleinrichtung (23) zwischen einer Verstaustellung bei Nicht-Gebrauch des Kindersitzes, in der sich das Auflageteil (13) zumindest teilweise im Bereich der Sitzfüße (9) unterhalb der Sitzfläche (11) des Sitzteiles (7) befindet, und einer Gebrauchsstellung des Kindersitzes bewegbar ist, in der das Auflageteil (13), über der Sitzfläche (11) liegend, eine erhöhte Kinder-Sitzfläche (17, 19) bildet.

## Beschreibung

Die Erfindung bezieht sich auf einen Fluggastsitz, mit Sitzkomponenten wie beispielsweise Rückenlehne, Armlehne und mittels Sitzfüßen auf einem Kabinenboden aufständerbarem Sitzteil, von denen zumindest eine Sitzkomponente relativ zu anderen lageveränderlich ist.

Fluggastsitze dieser Art finden für die Bestuhlung von Verkehrsflugzeugen weit verbreitete Anwendung. Je nach Auslegung und in Anpassung an unterschiedliche Komfortklassen wie Economy- oder Business-Class, ist zur Komfortverbesserung eine oder mehrere der Sitzkomponenten zur Anpassung an die Bedürfnisse des Sitzbenutzers lageeinstellbar.

Bei der Beförderung von Kindern, speziell von Kleinkindern, ergeben sich Probleme, weil der Sitz, trotz der Möglichkeit der Lageeinstellung von Sitzkomponenten, an Passagiere entsprechend geringer Körpergröße nicht so anpaßbar ist, dass den Komfort- und Sicherheitsanforderungen entsprochen wird. Eine übliche Lösung zur Vermeidung dieser Probleme besteht darin, dass bei Bedarf Zusatzsitze installiert werden, entsprechend der bei Kraftfahrzeugen üblichen Benutzung von Autokindersitzen.

Eine Verwendung von Autokindersitzen ist bei Fluggastsitzen gemäß vorhandener Vorschriften in einigen Ländern erlaubt. Dies gilt auch für Deutschland mit gewissen Einschränkungen. Für Kinder bis 6 Jahre ist auch ein speziell für die Verwendung in Flugzeugen entwickelter Kindersitz vom Luftfahrtbundesamt in Deutschland zugelassen worden.

Die Verwendung externer, in existierende Fluggastsitze installierbarer Zusatzsitze ist in mehrerer Hinsicht nachteilig. Beispielsweise ergeben sich bei Verwendung solcher Sitze Logistikprobleme für die betreffenden Fluggesellschaften, weil im praktischen Flugbetrieb bei Hinflug und Rückflug erfahrungsgemäß unterschiedlich viele Kinder beteiligt sind. Wenn auf einem Hinflug beispielsweise mehrere Kinder beteiligt sind, beim Rückflug keine Kinder mitreisen, müssen die dann nicht benötigten Kindersitze entweder im Flugzeug verstaut oder auf einem Flughafen gelagert werden.

Bekannte Zusatzsitze, wie zugelassene Autositze, sind nicht auf die Abmessungen von Flugzeugsitzen ausgelegt. Daher kommt es hier zu Installationsproblemen. Außerdem sind solche Sitze sehr sperrig und daher schwer im Flugzeug zu verstauen. Zugelassene Autositze müssen außerdem für jede in Frage kommende Sitzbauweise zugelassen werden. Es ist daher nicht sicher, dass ein Sitz auf einem Hin- und Rückflug verwendet werden kann, wenn dabei unterschiedliche Sitzauslegungen oder Flugzeugtypen zum Einsatz kommen. Ferner gestaltet sich der Ein- und Ausbau der Zusatzsitze für das Personal schwierig, weil die zwischen Hin- und Rückflug zur Verfügung stehenden Rüstzeiten vielfach stark begrenzt sind.

Ausgehend von diesem Stand der Technik liegt der Erfindung die Aufgabe zugrunde, einen Fluggastsitz zur Verfügung zu stellen, der einen integrierten, bedarfsweise in seine Gebrauchsstellung überführbaren Kindersitz enthält. Diese Aufgabe ist erfindungsgemäß durch einen Fluggastsitz gelöst, der die Merkmale des Patentanspruches 1 in seiner Gesamtheit aufweist.

Demgemäß steht ein Fluggastsitz zur Verfügung, der bedarfsweise in die Konfiguration eines Kindersitzes gebracht werden kann, indem ein lageveränderliches Auflageteil in eine Gebrauchsstellung gebracht wird, in der es eine erhöhte Kinder-Sitzfläche bildet. Gleichzeitig kann dieser Fluggastsitz als "normaler" Passagiersitz benutzt werden, wobei sich das Auflageteil in einer Verstaustellung befindet, in der sich das Auflageteil zumindest teilweise im Bereich der Sitzfüße unterhalb der Sitzfläche des Sitzteiles befindet.

Dadurch, dass erfindungsgemäß das Auflageteil mittels einer Einstelleinrichtung zwischen Verstaustellung und Gebrauchsstellung des Kindersitzes lageveränderlich ist, sind die beim Stand der Technik vorhandenen Einbauprobleme aus der Welt geschafft. Entsprechendes gilt für die oben erwähnten, beim Stand der Technik auftretenden Logistikprobleme, weil die den Kindersitz bildende Sitz-Zusatzkomponente in den Sitz integriert ist.

Vorzugsweise weist die Einstelleinrichtung eine Schwenkeinrichtung auf, mittels deren das Auflageteil in einer Schwenkbewegung um den vorderen Randbereich des Sitzteiles aus der Verstaustellung in die Gebrauchsstellung hochklappbar und aus dieser in die Verstaustellung abklappbar ist. Die Bedienung gestaltet sich bei solchen Ausführungsbeispielen besonders bequem und einfach, weil im Bedarfsfall mit einem einzigen Handgriff das Auflageteil aus seiner abgeklappten Verstaustellung nach oben geklappt werden kann, so dass es in seine Gebrauchsstellung oberhalb der Sitzfläche des Sitzteiles gelangt.

Die Schwenkeinrichtung kann mindestens einen Schwenkhebel aufweisen, der einerseits mit dem Auflageteil verbunden und andererseits an der Struktur des Sitzteiles schwenkbar gelagert ist. Die Schwenkeinrichtung zeichnet sich dadurch durch eine besonders einfache, leichtgewichtige Bauweise aus.

Bei besonders vorteilhaften Ausführungsbeispielen ist die Verbindung zwischen Auflageteil und Schwenkhebel durch eine Drehlagerung an der im wesentlichen ebenen Seitenfläche des Auflageteiles gebildet. Bei solcher drehbarer Lagerung des Auflageteiles ergibt sich die besonders vorteilhafte Möglichkeit, das Auflageteil so zu gestalten, dass es mit beiden einander entgegengesetzten, zwischen den Seitenflächen verlaufenden Breitseiten je eine Kinder-Sitzfläche bildet, von denen, je nach Drehstellung um die Drehlagerung, bei der Gebrauchsstellung die eine über der Sitzfläche des Sitzteiles liegt und die jeweils andere die nutzbare Kinder-Sitzfläche bildet. Wenn hierbei die Breitseiten unterschiedlich geformt oder gewölbt sind, lassen sich unterschiedlich große Sitzerhöhungen realisieren, je nachdem, welche Breitseite des Auflageteiles als Kinder-Sitzfläche obenliegend ist. Wenn die eine Breitseite beispielsweise eben oder leicht konvex gewölbt ist und die andere Breitseite konkav gewölbt ist und eine vertiefte Sitzmulde bildet, läßt sich bei obenliegender Sitzmulde eine verringerte Sitzerhöhung realisieren, verglichen mit der Benutzung der anderen Breitseite des Auflagetei les.

Vorzugsweise ist das Auflageteil durch ein Formkissen gebildet, das sowohl die gewünschte Sitzerhöhung gewährleistet, als auch eine ausreichend bequeme Sitzfläche für das Kind bildet.

Wenn bei besonders vorteilhaften Ausführungsbeispielen am Schwenkhebel ein Gurtschloßelement vorgesehen ist, das bei der der Gebrauchsstellung des Auflageteiles entsprechenden Schwenkstellung mit einem Gurtschloßelement des Sitzteiles verrastbar ist, übernimmt das am Sitzteil befindliche Gurtschloßelement, das bei Nicht-Gebrauch des Kindersitzes Teil des Sicherheitsgurtsystemes für den erwachsenen Passagier bildet, die Funktion der Sicherung des Auflageteiles bei Benutzung als Kindersitz.

Damit auch bei der Benutzung als Kindersitz wiederum ein freies Gurtschloßelement für ein Gurtsystem zur Verfügung steht, das als Rückhaltesystem für das Kind vorgesehen ist, kann der Schwenkhebel einen über die Drehlagerung am Auflageteil hinaus verlängerten Endteil aufweisen, an dem ein zweites Gurtschloßelement angebracht ist, das bei der der Gebrauchsstellung des Kindersitzes entsprechenden Schwenkstellung des Schwenkhebels ein gegenüber dem am Sitzteil befestigten Gurtschloßelement höher gelegenes Gurtschloßelement zur Benutzung für das Gurtsystem des Kindersitzes bildet.

Weiterhin kann vorgesehen sein, dass zur Bildung eines Drei-Punkt-Gurtsystemes, das bei Nicht-Gebrauch des Kindersitzes mit dem am Sitzteil befindlichen Gurtschloßelement und bei Gebrauchsstellung des Kindersitzes mit dem anderen, höherliegenden, am Schwenkhebel befindlichen Gurtschloßelement zusammenwirkt, ein Schultergurt vorgesehen ist, der an der Rückenlehne in deren oberem, seitlichen Bereich angebracht ist.

Nachstehend ist die Erfindung anhand eines in der Zeichnung dargestellten Ausführungsbeispieles im einzelnen erläutert. Es zeigen:
- Fig. 1 eine perspektivische, stark schematisch vereinfacht gezeichnete Schrägansicht eines Ausführungsbeispieles des erfindungsgemäßen Fluggastsitzes, wobei ein Armlehnen-Seitenteil weggelassen und der Zustand bei Nicht-Gebrauch des Kindersitzes gezeigt ist;
- Fig. 2 eine der Fig. 1 entsprechende Ansicht, wobei der Zustand bei der Gebrauchsstellung des Kindersitzes gezeigt ist;
- Fig. 3 eine gegenüber Fig. 1 und 2 vergrößerte Seitenansicht lediglich einiger Strukturelemente des Ausführungsbeispieles, wobei der Zustand des Nicht-Gebrauches des Kindersitzes gezeigt ist, und
- Fig. 4 eine der Fig. 3 ähnliche Darstellung, wobei der Zustand der Gebrauchsstellung des Kindersitzes gezeigt ist.

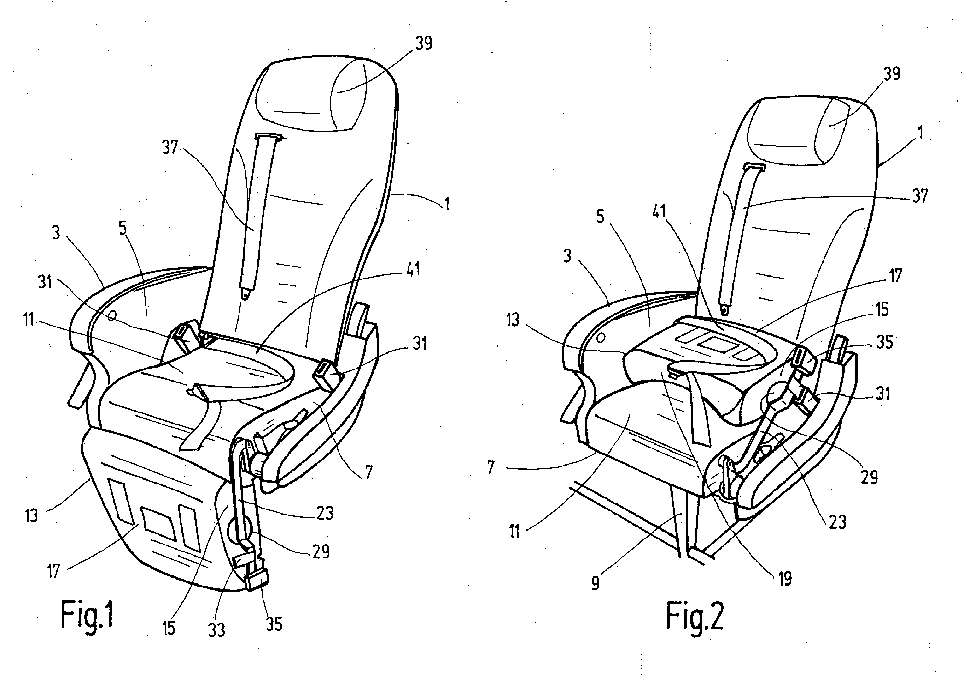

Fig. 1 und 2 zeigen von einem Fluggastsitz gemäß einem Ausführungsbeispiel der Erfindung in stark schematisch vereinfachter Darstellung eine Rükkenlehne 1 und eine von zwei seitlichen Armlehnen 3 mit einem zugehörigen Seitenteil 5. Eine weitere Armlehne mit zugeordnetem Seitenteil ist in Fig. 1 und 2 der Übersichtlichkeit halber weggelassen. Das mit 7 bezeichnete Sitzteil, das über Sitzfüße 9 auf einem zugehörigen Kabinenboden aufgeständert ist, weist eine Sitzfläche 11 zur Nutzung durch einen erwachsenen Passagier auf. Fig. 1 zeigt den Fluggastsitz in dem Zustand, der für die Benutzung durch einen erwachsenen Passagier vorgesehen ist, d. h. den Zustand des Nicht-Gebrauches eines dem Sitz zugehörigen Kindersitzes. In diesem Zustand befindet sich eine Sitz-Zusatzkomponente, die zur Bildung eines Kindersitzes verwendet wird, in der in Fig. 1 gezeigten Verstaustellung, in der ein Auflageteil, das beim vorliegenden Beispiel als Formkissen 13 ausgebildet ist, sich in einer nach unten abgeklappten Stellung befindet, in der sich das Formkissen 13 im wesentlichen unterhalb des vorderen Randbereiches des Sitzteiles 7 und im Bereich der Sitzfüße 9 befindet.

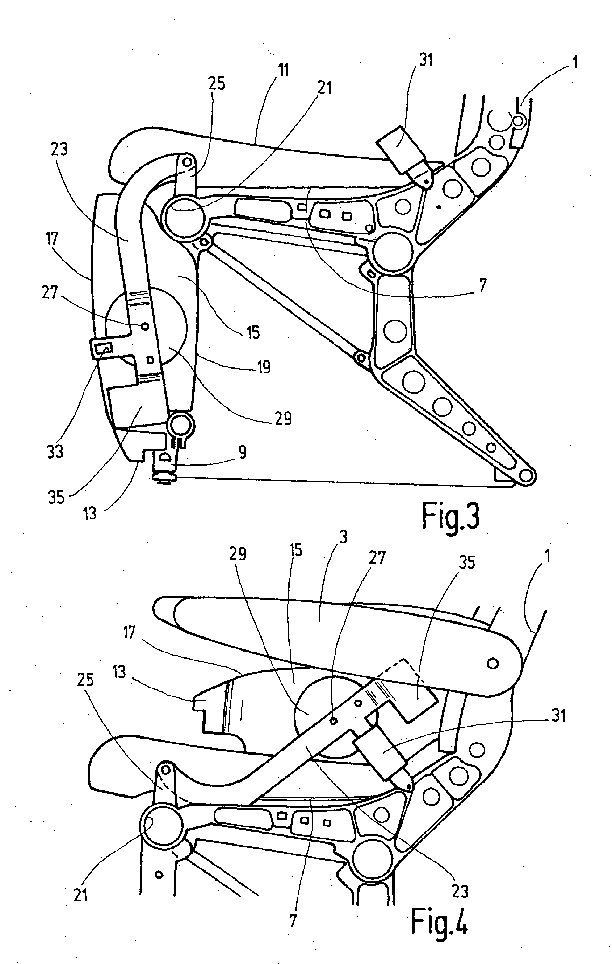

Fig. 2 zeigt den Zustand, bei dem sich das Formkissen 13 in der Gebrauchsstellung als Kindersitz befindet, wobei es aus der in Fig. 1 gezeigten Verstaustellung nach oben geklappt ist und auf der Sitzfläche 11 des Sitzteiles 7 liegt. Bei der Darstellung von Fig. 2 bildet das Formkissen 13 mit seiner oben liegenden, zwischen im wesentlichen ebenen Seitenflächen 15 verlaufenden Breitseite eine Kinder-Sitzfläche 17, die eine im wesentliche ebene oder leicht konvex gewölbte Form besitzt. Die entgegengesetzte Breitseite des Formkissens 13, die bei der Darstellung von Fig. 2 untenliegend ist, ist zur Bildung einer Art Sitzmulde konkav gewölbt oder vertieft. Aufgrund dieser Vertiefung kann diese Breitseite, wenn das Formkissen 13 aus der in Fig. 2 gezeigten Orientierung um 180° verdreht ist, eine Kinder-Sitzfläche 19 bilden, die gegenüber der Kinder-Sitzfläche 17 eine geringere Sitzerhöhung bildet. Die Einzeleinheiten der Einstelleinrichtung zum Überführen des Formkissen 13 zwischen ageklappter Verstaustellung und Gebrauchsstellung sowie zur Änderung der Orientierung des Formkissens 13 für die wahlweise Nutzung der Kinder-Sitzfläche 17 oder der Kinder-Sitzfläche 19 werden anhand der Fig. 3 und 4 näher erläutert.

Fig. 3 zeigt in stark schematisch vereinfachter Darstellung die wesentlichen Bauteile bei der Nicht-Gebrauchsstellung des Kindersitzes (wie bei Fig. 1), wobei das Formkissen 13 um den Bereich eines quer verlaufenden Tragholmes 21 herum nach unten geschwenkt ist, so dass es sich entlang eines Sitzfußes 9 gegen den Kabinenboden hin erstreckt. Für die Schwenkbewegung zwischen der in Fig. 3 gezeigten Verstaustellung und der Gebrauchsstellung, wie sie in Fig. 4 gezeigt ist, ist das Formkissen 13 an seitlichen Schwenkhebeln 23 gelagert, deren eines, bogenförmig gekrümmtes Ende jeweils an einem Lagerbock 25 schwenkbar gelagert ist, die am Tragholm 21 befestigt sind und sich von diesem nach oben erstrecken. In den Fig. ist jeweils nur einer der Schwenkhebel 23 sichtbar. An den gekrümmten Abschnitt jedes Schwenkhebels 23 schließt sich ein, von einer leichten Abkröpfung nach außen abgesehen, gerader Abschnitt des Schwenkhebels 23 an, von dem sich ein seitlicher Schwenkzapfen 27 zum Formkissen 13 hin erstreckt. Deren Seitenflächen 15 weisen jede einen Drehteller 29 in Form einer runden Scheibe auf, die mit dem Kernmaterial des Formkissens 13 an dessen Seitenfläche 15 verbunden ist, beispielsweise in ein den Kern des Formkissens 13 bildendes Schaumstoffmaterial eingeschäumt ist.

Die Drehteller 29 bilden zusammen mit dem Schwenkzapfen 27 am Schwenkhebel 23 eine Drehlagerung, um die das Formkissen 13 drehbar ist. Die Lage der Drehlagerung ist so gewählt, dass das Formkissen 13 bei der Gebrauchsstellung die in Fig. 2 und 4 gezeigte Position einnehmen kann, bei der die Kinder-Sitzfläche 17 obenliegend ist, oder eine um 180° gewendete Position einnehmen kann, bei der in der Gebrauchsstellung des Kindersitzes die andere, vertiefte Kinder-Sitzfläche 19 (Fig. 2) obenliegend ist, wobei die Kinder-Sitzhöhe vergleichsweise niedriger liegt.

Am Sitzteil 7 sind beidseits der Sitzfläche 11 Gurtschloßelemente 31 angebracht (Fig. 1). Bei der Gebrauchsstellung des Kindersitzes, also bei hoch geschwenktem Kissen 13 entsprechend der Darstellung der Fig. 2 und 4, dienen diese Gurtschloßelemente 31 der Sicherung des Kindersitzes in der Gebrauchsstellung, d. h. der Lagesicherung des Formkissens 13. Zu diesem Zweck erstreckt sich von jedem Schwenkhebel 23 im Bereich des Drehtellers 29 ein zum Gurtschloßelement 31 komplementäres Gurtschloßelement 33, das bei hoch geschwenktem Schwenkhebel 23 mit dem Gurtschloßelement 31 verrastet, siehe Fig. 2 und 4. Wie besonders deutlich aus Fig. 4 zu ersehen ist, ist der in der Fig. 3 sichtbare Schwenkhebel 23 über den Bereich des Schwenkzapfens 27 am Drehteller 29 hinaus verlängert und weist am verlängerten Ende ein zweites Gurtschloßelement 35 auf, das sich aufgrund des bei der Gebrauchsstellung des Kindersitzes schräg nach oben gerichteten Verlaufes des Schwenkhebels 23 im Bereich der Oberseite der Kinder-Sitzfläche 17 oder 19 befindet. Dieses Gurtschloßelement 35, hier als zweites Gurtschloßelement bezeichnet, ist daher, der Sitzerhöhung des Kindersitzes angepaßt, gegenüber dem Gurtschloßelement 31 nach oben versetzt, so dass es für das Gurtsystem des Kindes in richtig angepaßter Höhenlage benutzbar ist. Hierbei kann es sich um einen am Sitzteil verankerten, üblichen Beckengurt 41 handeln, der bei Verwendung des Kindersitzes mit dem erhöht gelegenen Gurtschloßelement 35 verrastbar ist. Bei Nicht-Gebrauch des Kindersitzes ist der Beckengurt 41 für den erwachsenen Passagier mit einem der tiefer liegenden Gurtschloßelemente 31 verrastbar.

Als Gurtsystem für den Kindersitz kann ein Drei-Punkt-Gurtsystem vorgesehen sein, zu dem ein Schultergurt 37 gehört, der, wie in Fig. 1 und 2 gezeigt, im seitlichen, oberen Bereich der Rückenlehne 1 schräg unterhalb einer Kopfstütze 39 angebracht sein und zusammen mit dem zugehörigen Beckengurt mit dem höher liegenden Gurtschloßelement 35 verrastet werden kann. Dieser Schultergurt 37 kann bei Nicht-Gebrauch des Kindersitzes, entsprechend der Darstellung von Fig. 1, auch Teil eines Drei-Punkt-Gurtsystem für den normalen, erwachsenen Passagier bilden, wobei das Gurtsystem in diesem Falle mit einem am Sitzteil 7 befindlichen Gurtschloßelement 31 zusammenwirkt.

## Patentansprüche

1. Fluggastsitz, mit Sitzkomponenten wie beispielsweise Rückenlehne (1), Armlehne (3) und mittels Sitzfüßen (9) auf dem Kabinenboden aufständerbarem Sitzteil (7), von denen zumindest eine Sitzkomponente relativ zu anderen lageveränderlich ist, und mit einer Sitz-Zusatzkomponente, die zur bedarfsweisen Bildung eines Kindersitzes ein Auflageteil (13) aufweist, das mittels einer Einstelleinrichtung (23) zwischen einer Verstaustellung bei Nicht-Gebrauch des Kindersitzes, in der sich das Auflageteil (13) zumindest teilweise im Bereich der Sitzfüße (9) unterhalb der Sitzfläche (11) des Sitzteiles (7) befindet, und einer Gebrauchsstellung des Kindersitzes bewegbar ist, in der das Auflageteil (13), über der Sitzfläche (11) liegend, eine erhöhte Kinder-Sitzfläche (17 oder 19) bildet.

2. Fluggastsitz nach Anspruch 1, **dadurch gekennzeichnet, dass** die Einstelleinrichtung eine Schwenkeinrichtung (23) aufweist, mittels deren das Auflageteil (13) in einer Schwenkbewegung um den vorderen Randbereich des Sitzteiles (7) aus der Verstaustellung in die Gebrauchsstellung hochklappbar und aus dieser in die Verstaustellung abklappbar ist.

3. Fluggastsitz nach Anspruch 2, **dadurch gekennzeichnet, dass** die Schwenkeinrichtung mindestens einen Schwenkhebel (23) aufweist, der einerseits mit dem Auflageteil (13) an dessen die Kinder-Sitzfläche (17, 19) seitlich begrenzender Seitenfläche (15) verbunden und andererseits an der Struktur (21, 25) des Sitzteiles (7) um eine Schwenkachse schwenkbar gelagert ist, die sich quer zur Sitzlängsrichtung erstreckt und am vorderen Bereich der Sitzfläche (11) gelegen ist.

4. Fluggastsitz nach Anspruch 3, **dadurch gekennzeichnet, dass** die Verbindung zwischen (13) und Schwenkhebel (23) durch eine Drehlagerung (27, 29) an der im wesentlich ebenen Seitenfläche (15) des Auflageteiles (13) gebildet ist.

5. Fluggastsitz nach Anspruch 4, **dadurch gekennzeichnet, dass** sich die Drehlagerung (27, 29) an der Seitenfläche (15) des (13) zumindest näherungsweise zentral und in gleichen Abständen vom vorderen und hinteren Rand der Kinder-Sitzfläche (17, 19) befindet.

6. Fluggastsitz nach Anspruch 5, **dadurch gekennzeichnet, dass** das (13) mit beiden einander entgegengesetzten, zwischen den Seitenflächen (15) verlaufenden Breitseiten je eine Kinder-Sitzfläche (17 und 19) bildet, von denen, je nach Drehstellung um die Drehlagerung (27, 29), bei der Gebrauchsstellung die eine über der Sitzfläche (11) des Sitzteiles (7) liegt und die jeweils andere die nutzbare Kinder-Sitzfläche (17 oder 19) bildet, und dass eine der Breitseiten eine vertiefte Sitzmulde aufweist, so dass die durch diese Breitseite gebildete nutzbare Kinder-Sitzfläche (19) eine verringerte Sitzerhöhung bildet.

7. Fluggastsitz nach einem der Ansprüche 3 bis 6, **dadurch gekennzeichnet, dass** am Schwenkhebel (23) ein Gurtschloßelement (33) vorgesehen ist, das bei der der Gebrauchsstellung des Auflageteiles (13) entsprechenden Schwenkstellung mit einem Gurtschloßelement (31) des Sitzteiles (7) verrastbar ist.

8. Fluggastsitz nach Anspruch 7, **dadurch gekennzeichnet, dass** das Gurtschloßelement (33) am Schwenkhebel (23) im Bereich von dessen Drehlagerung (27, 29) am Auflageteil (13) vorgesehen ist.

9. Fluggastsitz nach Anspruch 7 oder 8, **dadurch gekennzeichnet, dass** der Schwenkhebel (23) einen über die Drehlagerung (27, 29) am Auflageteil (13) hinaus verlängerten Endteil aufweist, und dass an diesem ein zweites Gurtschloßelement (35) angebracht ist, das bei der der Gebrauchsstellung des Kindersitzes entsprechenden Schwenkstellung des Schwenkhebels (23) gegenüber dem am Sitzteil (7) befestigten Gurtschloßelement (31) höherliegend und zur Benutzung für das Gurtsystem des Kindersitzes vorgesehen ist.

10. Fluggastsitz nach Anspruch 9, **dadurch gekennzeichnet, dass** zur Bildung eines 3-Punkt-Gurtsystemes, das bei Nicht-Gebrauch des Kindersitzes mit dem am Sitzteil (7) befindlichen Gurtschloßelement (31) und bei der Gebrauchsstellung des Kindersitzes mit dem höherliegenden, am Schwenkhebel (23) befindlichen zweiten Gurtschloßelement (35) zusammenwirkt, ein Schultergurt (37) vorgesehen ist, der an der Rükkenlehne (1) in deren oberem, seitlichen Bereich eingebracht ist.

11. Fluggastsitz nach einem der Ansprüche 1 bis 10, **dadurch gekennzeichnet, dass** als Auflageteil ein Formkissen (13) vorgesehen ist, dessen beide Breitseiten je eine nutzbare Kinder-Sitzfläche (17, 19) unterschiedlicher Kontur bilden.
